# FASCICULE DE BREVET EUROPEEN

(11) **EP 0 960 929 B1**
(45) Date de publication et mention de la délivrance du brevet: **13.08.2003**
(21) Numéro de dépôt: 99401112.0
(22) Date de dépôt: 06.05.1999
(51) Int. Cl.: C10G 11/18

(54) **Procédé et dispositif d'introduction de particules de catalyseur dans un réacteur de craquage catalytique à l'état fluide**
Verfahren und Vorrichtung zur Einführung von Katalysatorteilchen in einem katalytischen Wirbelschichtspaltungsreaktor
Process and apparatus for the introduction of catalyst particles in a fluidised catalytic cracking reactor

(30) Priorité: 25.05.1998 FR 9806526
(43) Date de publication de la demande: 01.12.1999
(73) Titulaire: TotalFinaElf France, 92800 Puteaux (FR)
(72) Inventeur: Mauleon, Jean-Louis, 27500 Ste Croix sur Aizier (FR); Del Pozo, Mariano, 76600 Le Havre (FR); Barthod, Daniel, 14600 Honfleur (FR)
(74) Mandataire: Jolly, Jean-Pierre

(56) Documents cités:
- EP-A- 0 191 695
- EP-A- 0 209 442
- EP-A- 0 458 416
- EP-A- 0 719 850
- FR-A- 2 654 435
- FR-A- 2 753 453
- US-A- 3 353 925

## Description

La présente invention concerne le craquage catalytique d'hydrocarbures en présence de catalyseur en phase fluidisée. Elle a plus particulièrement pour objet des perfectionnements apportés aux réacteurs de craquage catalytique, à l'état fluide.

De manière connue en soi, l'industrie pétrolière a recours à des procédés de conversion des charges lourdes d'hydrocarbures, dans lesquels des molécules d'hydrocarbures à haut poids moléculaire et à point d'ébullition élevé sont scindées en molécules plus petites, qui peuvent bouillir dans des domaines de températures plus faibles, convenant à l'usage recherché.

Dans ce domaine, le procédé le plus largement répandu est actuellement le procédé dit de craquage catalytique à l'état fluide (communément dénommé procédé FCC, de l'anglais Fluid Catalytic Cracking). Dans ce type de procédé, la charge d'hydrocarbures, pulvérisée sous forme de fines gouttelettes, est mise en contact avec des grains de catalyseur de craquage à haute température et qui circulent dans le réacteur sous forme de lit fluidisé, c'est-à-dire en suspension plus ou moins dense au sein d'un fluide gazeux assurant ou assistant leur transport. Au contact du catalyseur chaud, il y a vaporisation de la charge, suivie du craquage des molécules d'hydrocarbures sur les sites actifs du catalyseur. Après que l'on ait ainsi atteint la gamme de poids moléculaire désirée, avec un abaissement correspondant des points d'ébullition, les effluents de la réaction sont séparés des grains de catalyseur. Ces grains de catalyseurs, désactivés en raison du coke qui s'est déposé à leur surface, sont alors strippés afin de récupérer les hydrocarbures entraînés, puis régénérés par combustion du coke, et enfin remis en contact avec la charge à craquer.

Les réacteurs utilisés sont généralement des réacteurs verticaux de type tubulaire, dans lesquels le catalyseur se déplace suivant un flux essentiellement ascendant (le réacteur est alors dénommé " riser ") ou suivant un flux essentiellement descendant (le réacteur est alors dénommé " dropper " ou " downer ").

On sait que l'un des facteurs clefs du processus de craquage catalytique réside dans la qualité du mélange de la charge, injectée à l'état liquide sous forme de fines gouttelettes, avec le flux de grains de catalyseur chaud en provenance de la régénération. Il est en effet fondamental d'assurer une mise en contact rapide, intime et uniforme, des hydrocarbures avec le flux de catalyseur, car cela conditionne l'efficacité du transfert thermique s'effectuant des grains de catalyseur chaud vers les gouttelettes de charge. De l'efficacité de ce transfert thermique dépendent la rapidité et l'uniformité de la vaporisation de la charge, et donc la qualité de la conversion de cette dernière, puisque la réaction de craquage catalytique s'effectue à l'état gazeux.

Les études effectuées dans ce domaine par la Demanderesse ont cependant révélé que les rendements obtenus avec les unités de craquage les plus performantes demeurent inférieurs à ce que prévoient les études théoriques, et que cette différence est notamment imputable à une mauvaise mise en contact des gouttelettes de charge avec les particules de catalyseur. Elle a supposé que cela était en partie dû à une inhomogénéité de la densité du lit fluidisé de catalyseur arrivant dans la zone d'injection de charge, c'est à dire à une ségrégation importante au sein du mélange constitué par les grains de catalyseur et le fluide gazeux assurant leur transport.

Notamment, elle a mis en évidence deux principaux facteurs de ségrégation:
- D'une part, dans les dispositifs classiques, le régime de circulation des grains de catalyseur manque souvent de stabilité. Notamment, les grains de catalyseur en provenance du régénérateur ont tendance à arriver " par paquets ", et l'on observe alors un phénomène dit de pulsations: l'alimentation du réacteur en grains de catalyseur n'est pas continue, et la densité du flux de catalyseur arrivant dans la zone de craquage peut alors fluctuer notablement dans le temps autour d'une valeur moyenne. Ce régime pulsatoire se traduit par une fluctuation dans le temps du rapport réel C/O entre la quantité de catalyseur C introduite dans la zone réactionnelle et celle O de la charge à craquer injectée.
- D'autre part, notamment pour des unités équipées d'un réacteur à flux ascendant (riser), dans la ligne inclinée assurant le transfert des grains de catalyseur du régénérateur vers le réacteur, ces grains tendent à se rassembler sur le fond, tandis que la vapeur de convoyage forme des " poches " dans la partie supérieure de cette ligne de transfert. Le coude présent au niveau de la connexion entre cette ligne inclinée et le réacteur ne fait qu'accentuer la ségrégation. Le dispositif de fluidisation du catalyseur présent à l'entrée du réacteur ne permettant pas de rééquilibrer la distribution de grains de catalyseur sur la section du réacteur, on constate, sur une même section, une inhomogénéité de la densité de catalyseur. Ceci a pour conséquence une inhomogénéité du rapport réel C/O et donc du profil de température pour une même section du réacteur.

Au niveau de la zone d'injection de la charge, ces variations spatiales et temporelles du rapport réel C/O s'avèrent particulièrement problématiques, puisqu'elles entraînent une inhomogénéité de la vaporisation et du craquage de la charge injectée. Aux endroits où la densité de catalyseur est trop élevée, risque de se produire un surcraquage de la charge, générateur de gaz secs et de coke au détriment des hydrocarbures intermédiaires recherchés. En revanche, aux endroits où la densité de catalyseur est insuffisante, la charge n'est que partiellement vaporisée, ce qui entraîne un dépôt accru d'hydrocarbures à la surface du catalyseur, par collision des grains de catalyseur avec des gouttelettes de charge non vaporisées, d'où une cokéfaction majorée du catalyseur. Par ailleurs, le déficit en sites catalytiques favorise les réactions de craquage thermique, peu sélectif, au détriment des réactions de craquage catalytique.

Tous ces phénomènes se traduisent in fine par une pénalité importante en terme de rendements et de sélectivité de la conversion, et conduisent à un cokage important des internes du réacteur et de l'enceinte de séparation et de strippage.

Afin de remédier aux problèmes décrits ci-avant, la Demanderesse a d'ores et déjà proposé un certain nombre de solutions.

Dans le brevet EP-0 326 478, elle a proposé une nouvelle forme pour la connexion reliant le régénérateur au réacteur d'une unité de craquage catalytique fonctionnant en mode ascendant. Cette connexion est notamment constituée de tubulures reliées par des coudes incurvés n'imposant ni de point de rebroussement au trajet des particules, ni de modifications brusques du diamètre des tubulures. Sont également prévues des injections d'un gaz vecteur d'appoint, afin d'accélérer de manière contrôlée les particules de catalyseur au niveau du coude de raccordement au réacteur. Par ce procédé, il est possible de raccorder la ligne de transfert de catalyseur et le réacteur ascendant suivant un profil curviligne, qui permet de limiter la déshomogénéisation du catalyseur et du fluide assurant son transport, mais elle ne permet néanmoins de s'affranchir totalement ni de l'inévitable ségrégation qui a lieu dans un mélange biphasique solide/gaz, ni du régime pulsatoire de la circulation de catalyseur. De plus, elle correspond à une optimisation de la configuration d'une unité comportant un réacteur fonctionnant en mode ascendant, et ne concerne donc absolument pas les unités où le réacteur fonctionne en mode descendant.

Dans le brevet EP-0 191 695, la Demanderesse a décrit un système avantageux de fluidisation en deux étapes à la base d'un réacteur de type élévateur. La solution proposée consiste à injecter à faible débit dans le réacteur un premier fluide au-dessous du niveau d'introduction des grains de catalyseur en provenance de la zone de régénération, en vue de maintenir un lit fluidisé dense et homogène de catalyseur en bas du "riser", et à injecter simultanément un second fluide en dessous de la partie supérieure du lit dense de catalyseur, en vue de réaliser une phase fluidisée plus diluée, homogène et à débit constant de grains de catalyseur, en amont de la zone d'injection de charge. Un tel procédé, bien qu'efficace, possède néanmoins des inconvénients non négligeables. Très consommateur de vapeur de fluidisation, il entraîne une dilution souvent excessive de la suspension de grains de catalyseur, ce qui peut nuire à la vitesse de vaporisation de la charge à craquer et donc à la conversion de cette dernière. Par ailleurs, ici encore, le procédé a été spécifiquement conçu pour répondre aux problèmes de fluidisation dans un réacteur à flux ascendant ("riser"), et n'est absolument pas transposable au cas des réacteurs à flux descendant ("downer").

La présente invention propose de remédier à ces inconvénients au moyen d'un dispositif qui permet d'introduire un flux homogène et stable de particules de catalyseur dans la zone d'injection de la charge à craquer, que ce réacteur soit à flux ascendant ou descendant.

L'invention a par conséquent pour objet une unité de craquage catalytique comprenant un réacteur de craquage catalytique à l'état fluide muni, dans sa partie amont, d'au moins un moyen d'alimentation en particules de catalyseur au moins partiellement régénérées et d'au moins un moyen d'injection de la charge à craquer, et un dispositif d'introduction de particules de catalyseur dans le réacteur (1, 41), cette unité étant caractérisée en ce que ladite partie amont du réacteur comporte, entre la zone d'alimentation en flux de catalyseur et la zone d'injection de la charge à craquer, au moins un élément de garnissage solide fixe, s'étendant sur tout ou partie de la section transversale du réacteur et constitué d'un réseau de cellules au travers desquelles passent les particules de catalyseur, ledit réseau assurant au moins une étape de division et de recombinaison du flux de particules de catalyseur, de manière à redistribuer ce dernier de façon homogène sur la section transversale du réacteur.

Dans la présente description, on entend par réseau de cellules un ensemble d'au moins deux cellules et, de préférence, d'un grand nombre de cellules, juxtaposées les unes aux autres et qui peuvent être de tailles identiques ou non.

Par ailleurs, on désigne par réacteur l'enceinte verticale de type tubulaire, dans laquelle s'effectue la mise en contact de la charge à craquer avec un flux de particules de catalyseur se déplaçant suivant un flux essentiellement ascendant (réacteur de type "riser") ou suivant un flux essentiellement descendant (réacteur de type "dropper" ou "downer").

Dans l'unité selon l'invention, le réacteur comporte un ou plusieurs éléments de garnissage solides fixes, c'est-à-dire qui ne comportent aucune partie mobile. De manière préférée, chaque élément de garnissage s'étend sur toute la section transversale du réacteur.

Un tel élément de garnissage peut avantageusement consister en une grille. L'élément assure alors une division puis une recombinaison du flux de gaz et de particules qui le traverse.

Il peut également s'agir d'un système de barres entrecroisées, empilées et éventuellement soudées les unes aux autres. Les barres employées peuvent avoir tout type de section; elles seront avantageusement de section ronde, afin de ne pas présenter d'angle vif donnant lieu à des phénomènes d'abrasion par le flux de particules de catalyseur.

Les éléments de garnissage préférés sont des éléments du type des mélangeurs statiques. En effet, un tel élément assure à lui seul et sur un parcours très court toute une série de divisions/recombinaisons successives du flux de gaz et de particules qui le traverse.

Un premier avantage du dispositif selon l'invention par rapport à l'art antérieur est qu'il permet d'éviter d'avoir à introduire trop de vapeur de fluidisation, comme dans le brevet EP-0 191 695, ce qui non seulement réduit les contraintes opératoires de l'unité mais également s'avère très bénéfique en terme de coûts de fonctionnement de cette unité. Par ailleurs, il permet d'éviter le risque d'une dilution excessive du flux de particules catalytiques, qui peut être nuisible à l'efficacité de la vaporisation de la charge. Enfin et surtout, il assure, dans un minimum de place, un brassage optimal du lit fluidisé de catalyseur.

Un second avantage dudit dispositif concerne son caractère universel: il peut en effet s'appliquer à tout type de réacteur, que celui-ci soit de type "riser" ou"downer", sans modification substantielle de ce dernier, puisqu'il suffit d'y introduire ledit garnissage. Facile à mettre en oeuvre et relativement peu coûteux, le dispositif selon l'invention s'avère donc extrêmement avantageux dans le cadre de la modernisation d'unités existantes.

L'invention a également pour objet le procédé associé au dispositif mentionné ci-avant. Dans ce procédé de craquage catalytique d'une charge hydrocarbonée, on alimente un réacteur de type tubulaire, à flux essentiellement ascendant ou descendant, en particules de catalyseur au moins partiellement régénérées, sous forme d'un lit fluidisé dans lequel on injecte ensuite la charge à craquer, et ce procédé est caractérisé en ce que, entre l'étape d'alimentation en flux de catalyseur et l'étape d'injection de la charge à craquer, est prévue au moins une étape consistant en une ou plusieurs divisions simultanées du flux de grains de catalyseur suivies de recombinaison dudit flux, de manière à redistribuer ce dernier de façon homogène sur la section transversale du réacteur.

Le procédé et le dispositif conformes à l'invention permettent de réaliser les objectifs précités. Ils permettent en effet de réaliser une, et de préférence plusieurs étapes successives de divisions et de recombinaisons du flux de grains de catalyseur, ce qui a pour effet de mélanger et d'homogénéiser radialement, sur toute la section du réacteur, le flux de catalyseur pénétrant dans la zone d'injection de charge.

Par ailleurs, de manière surprenante, l'invention s'est avérée avoir un effet stabilisant sur l'alimentation du réacteur en particules de catalyseur. On constate en effet une disparition des pulsations rapides du flux de catalyseur pénétrant dans la zone d'injection de charge. Cette continuité de l'alimentation en catalyseur est fondamentale, d'autant plus lorsque, comme c'est souvent le cas, l'on cherche à réduire les temps de contact entre la charge et le catalyseur.

L'homogénéisation et la stabilisation de l'alimentation du réacteur en flux de catalyseur se traduisent, dans la zone d'injection de charge, par une meilleure homogénéité du rapport réel C/O, ce qui entraîne une amélioration de la qualité des transferts thermiques entre les gouttelettes de charge et un flux de catalyseur plus homogène et plus continu. La rapidité et l'uniformité de la vaporisation de la charge s'en trouvent améliorées et il y a ainsi diminution des phénomènes locaux de surcraquage et de vaporisation insuffisante. On augmente ainsi non seulement le taux de conversion de la charge, mais aussi la sélectivité de cette conversion: il se forme moins de produits très légers (tels que les gaz secs, peu valorisables) et moins de coke.

Cette diminution de la quantité de coke formé lors de la mise en contact de la charge et du catalyseur est d'autant plus appréciable qu'elle permet, d'une part, d'accéder à un meilleur contrôle du bilan thermique de l'unité et, d'autre part, d'éviter une désactivation prématurée du catalyseur par neutralisation des sites catalytiques. De plus, elle permet de faciliter l'étape de régénération du catalyseur, en réduisant les risques d'apparition de points chauds, dommageables pour le catalyseur, et en diminuant les risques d'atteindre dans le ou les régénérateurs des niveaux de température particulièrement élevés et incompatibles avec la métallurgie de l'unité.

Un autre avantage de l'invention est lié à l'amélioration du processus de vaporisation de la charge, lequel rend possible la conversion dans l'unité de craquage catalytique de coupes très lourdes, telles que par exemple des résidus. En effet, ces charges bouillent à des températures particulièrement élevées et sont connues pour être difficilement vaporisables dans les conditions de la réaction de craquage. L'invention, en proposant une meilleure mise en contact des gouttelettes de charge et des grains de catalyseur, permet une meilleure vaporisation de ladite charge, ce qui rend possible la conversion de charges contenant des quantités beaucoup plus importantes de produits lourds. La flexibilité et la rentabilité de l'unité de craquage catalytique sont ainsi accrues.

D'autres avantages du procédé et du dispositif selon l'invention apparaîtront au cours de la description plus détaillée de quelques modes préférentiels de réalisation.

De préférence, le dispositif selon l'invention comporte un ou plusieurs éléments de garnissage, de telle sorte que soient réalisées un nombre important de divisions et recombinaisons successives du flux de grains de catalyseur en amont de la zone d'injection de charge.

Les divisions du flux de grains de catalyseur doivent être de préférence les plus fines possibles, tout en tenant compte des impératifs liés à la circulation des particules, des contraintes du procédé et de l'espace dont on dispose pour la mise en place du ou des éléments de garnissage assurant lesdites divisions.

Chaque élément de garnissage est positionné sur la section transversale du réacteur, perpendiculairement à l'axe de ce dernier, et est constitué d'un réseau de cellules permettant de réaliser une, voire plusieurs étapes successives de division/recombinaison du flux de particules de catalyseur qui traverse lesdites cellules. La section de ces cellules est choisie en fonction de la taille et de la vitesse de passage des particules de catalyseur, afin d'éviter tout phénomène d'obstruction à l'intérieur de l'élément de garnissage, ce qui pourrait nuire à la bonne circulation du flux de catalyseur.

Selon un mode de réalisation préférentiel, l'élément de garnissage est constitué d'un réseau de cellules orientant chacune de manière sensiblement radiale, par rapport à l'axe du réacteur, la direction du flux de gaz et de particules qui la traverse. Ces cellules peuvent revêtir de nombreuses formes.

En particulier, des éléments de garnissage du type des mélangeurs statiques, habituellement employés dans d'autres domaines, peuvent être adaptés et constituer des éléments particulièrement efficaces.

Avantageusement, on utilise un élément de garnissage constitué d'un réseau de cellules agencées de manière à induire des déviations dans deux types de directions différentes : sensiblement 50 % du flux de gaz et de catalyseur est dévié dans une première direction et sensiblement 50 % du flux de gaz et de catalyseur est dévié dans une seconde direction formant un angle de 10 à 90 degrés avec la première direction.

Cette déviation et cette orientation radiale sont induites par la géométrie desdites cellules, agencées en réseau. Un tel réseau peut avantageusement être constitué d'un assemblage de plaques ondulées, coupées transversalement par rapport à leurs plans. Ces plaques ondulées sont façonnées ou soudées de façon telle que l'arête d'ondulation de chaque plaque forme un angle de sensiblement 45 à 135 degrés avec l'arête d'ondulation de la plaque adjacente. Selon un mode préféré de l'invention, cet angle est de 90 degrés, définissant ainsi un réseau de canaux croisés à angle droit. Par le terme arête d'ondulation, on désigne le segment de droite constituant le sommet d'une ondulation de la plaque.

Cet agencement en canaux croisés permet avantageusement de dévier les particules à chaque intersection entre des sommets d'ondulation d'une première plaque et des sommets d'ondulation d'une plaque adjacente, améliorant ainsi les divisions et recombinaisons des particules et du fluide qui les entoure. L'élément de garnissage ainsi constitué présente l'avantage de réaliser à lui seul toute une série de divisions/recombinaisons successives, optimisées de manière à aboutir à un bon mélange et une homogénéisation des particules de catalyseur et du fluide gazeux au sein du lit fluidisé.

Des mélangeurs statiques du type de ceux commercialisés par les Sociétés Sulzer-SMV ou Kenics peuvent parfaitement être adaptés en vue de réaliser un tel garnissage.

D'autres types de mélangeurs statiques peuvent également constituer d'excellents éléments de garnissage, tels que les mélangeurs statiques constitués d'un ou plusieurs fragments d'hélices. De manière avantageuse, ledit mélangeur statique est constitué de plusieurs fragments d'hélice juxtaposés et décalés en rotation les uns par rapport aux autres.

Selon un mode de réalisation particulièrement avantageux, le réacteur de craquage catalytique comporte au moins deux, et de préférence de deux à quatre éléments de garnissage, qui peuvent être identiques ou non.

Ces éléments de garnissage peuvent être juxtaposés ou au contraire espacés d'une distance dépendant de leur nature et des contraintes géométriques du procédé.

Si au moins deux éléments de garnissage identiques sont présents, ceux-ci seront de préférence décalés en translation et/ou en rotation, de telle sorte que les réseaux constitutifs de chacun ne soient pas strictement superposés.

Par exemple, si lesdits éléments sont constitués de plaques ondulées assemblées, le plan des plaques ondulées d'un premier élément sera préférentiellement orienté de manière à former un angle de sensiblement 45 à 90 degrés avec le plan des plaques ondulées du second élément du même type le plus proche.

Les éléments de garnissage intervenant dans le dispositif selon l'invention doivent demeurer intacts dans les conditions sévères de mise en oeuvre du procédé de craquage catalytique à l'état fluide. Notamment, ils sont constitués d'un ou plusieurs matériaux aptes à résister à la chaleur et à l'érosion, tels que l'acier réfractaire, la céramique.

Les éléments de garnissage sont avantageusement positionnés, dans la partie verticale du réacteur située en amont de l'injection de la charge, à un niveau tel que le flux de grains de catalyseur qui les traverse se trouve sous forme d'une phase fluidisée, dont on peut, par injection de vapeur de fluidisation, ajuster la densité à une valeur comprise entre 200 et 800 kg/m³.

Ces éléments de garnissage sont positionnés en amont de la zone d'injection de charge: la distance séparant l'élément de garnissage aval des injecteurs amont est de préférence comprise entre 0,3 et 3 fois le diamètre moyen du réacteur.

Une variante particulièrement avantageuse du procédé selon l'invention consiste à réhomogénéiser ensuite le flux de particules de catalyseur immédiatement en aval de l'injection de charge à craquer, en procédant à un recentrage des particules de catalyseur en direction de l'axe du réacteur. Ceci permet de corriger la ségrégation induite par l'injection de la charge et la vaporisation très rapide de cette dernière, qui tendent à projeter et concentrer le catalyseur sur les parois du réacteur. On dispose ainsi d'une véritable chambre de mélange, comprenant des moyens d'homogénéisation du lit fluidisé de catalyseur à la fois en amont et en aval de l'injection de charge, ce qui permet d'optimiser de manière encore plus complète l'efficacité du contactage entre le catalyseur et les hydrocarbures à craquer.

Pour réhomogénéiser le mélange réactionnel en aval de l'injection de charge, on peut employer tout moyen connu permettant de dévier le trajet des particules de catalyseur et préférentiellement de les repousser en direction de l'axe central du réacteur.

Ceci peut être avantageusement réalisé au moyen de un ou plusieurs obstacles circulaires profilés, positionnés sur toute la périphérie de la paroi interne du réacteur et assurant un ou plusieurs rétrécissements locaux de la section de ce dernier. Ces obstacles peuvent avantageusement être annulaires ou hélicoïdaux, et présenter une section arrondie, par exemple hyperbolique, en demi-cercle ou encore en demi-ellipse. Ainsi, l'absence d'angles vifs évite tout risque d'érosion desdits obstacles par le flux de particules de catalyseur.

On peut également employer un ou plusieurs éléments de garnissage tels que ceux intervenant dans l'homogénéisation du lit fluidisé de catalyseur en amont de l'injection de charge et qui ont été décrits ci-avant, tels que des grilles, des barres entrecroisées, des éléments du type des mélangeurs statiques.

On peut également recourir à un dispositif d'injection de fluide gazeux de recentrage, positionné sur ou dans la paroi interne du réacteur et tel que décrit dans le brevet EP-0 485 259, au nom de la Demanderesse.

On peut ainsi, pour renforcer l'efficacité du procédé selon l'invention, recourir à un ou plusieurs moyens successifs de réhomogénéisation du mélange réactionnel, positionnés immédiatement en aval de l'injection de charge: ces moyens se situent de préférence à une distance comprise entre 0,5 et 2 fois le diamètre moyen du réacteur à partir des injecteurs les plus en aval.

Dans la présente description, le mode d'injection employé n'est pas spécifié et ce peut être tout mode d'injection connu en soi. En particulier, l'injection de charge à craquer peut parfaitement être effectuée à co-courant et/ou à contre-courant du sens global de circulation du catalyseur dans le réacteur de craquage (voir par exemple à cet effet le brevet EP-0 209 442, au nom de la Demanderesse).

De même, il n'est pas mentionné le type de catalyseur employé ni le moyen de mise en circulation de celui-ci sous forme de lit fluidisé plus ou moins dilué par des fluides gazeux de dilution, qui sont des données bien connues de l'Homme de l'Art.

Par ailleurs, l'Homme de l'Art saura parfaitement adapter le dispositif et le procédé objets de la présente invention à des procédés apparentés au craquage catalytique, tels que par exemple des procédés dans lesquels on réalise des réactions du type des craquages thermiques par mise en contact, dans un réacteur de type tubulaire, d'une coupe d'hydrocarbures à convertir avec une phase fluidisée de particules essentiellement caloporteuses.

Diverses formes de mise en oeuvre de l'invention vont être décrites ci-après plus en détail, en référence aux dessins annexés. Ceux-ci visent seulement à illustrer l'invention et n'ont donc aucun caractère limitatif, le dispositif et le procédé objets de la présente invention pouvant être mis en oeuvre suivant de très nombreuses variantes.

Sur ces dessins :

La figure 1 représente une unité de craquage catalytique équipée d'un réacteur à flux essentiellement ascendant et au sein de laquelle est intégré un dispositif conforme à l'invention.

Les figures 2 et 3 sont des vues plus détaillées, présentant deux variantes de réalisation de l'invention dans un réacteur à flux essentiellement ascendant.

Les figures 4 et 5 sont des vues schématiques en perspective de deux éléments de garnissage du type des mélangeurs statiques, qui peuvent être avantageusement positionnés en amont de la zone d'injection de la charge à craquer, ou encore utilisés comme moyen de réhomogénéisation du mélange réactionnel en aval de la zone d'injection de charge.

La figure 6 est une vue schématique illustrant l'utilisation du dispositif conforme à l'invention dans le cas d'une unité de craquage catalytique équipée d'un réacteur à flux essentiellement descendant.

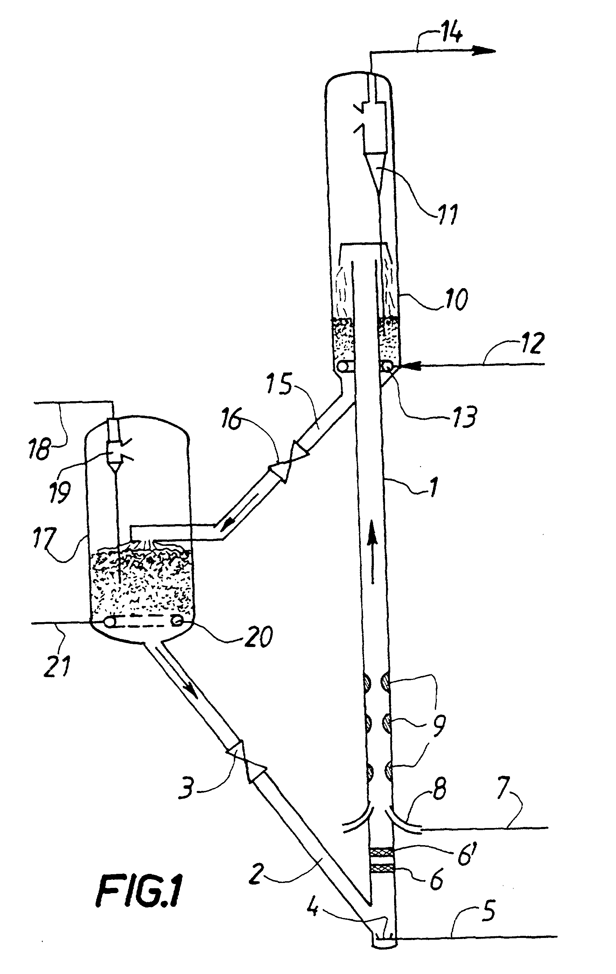

La figure 1 illustre une forme de mise en oeuvre du dispositif d'introduction de particules catalytiques selon l'invention, dans une unité de craquage catalytique équipée d'un réacteur à flux essentiellement ascendant. Cette unité est d'un type connu en soi. Elle comprend notamment un réacteur en forme de colonne 1, dit élévateur de charge, ou riser, alimenté à sa base par la ligne 2 en particules de catalyseur régénéré en quantité déterminée. Un gaz élévateur, par exemple de la vapeur d'eau, est introduit dans la colonne 1 par la ligne 5, au moyen d'un diffuseur 4, tandis que la charge à craquer est acheminée au moyen de la ligne 7 et injectée dans le réacteur 1 au moyen des injecteurs 8.

Conformément à l'invention, deux éléments de garnissage 6 et 6', ici deux grilles fixées dans le réacteur 1 transversalement à celui-ci, sont situés immédiatement en amont de la zone d'injection de la charge et permettent d'homogénéiser et de stabiliser la densité du flux de particules et de gaz pénétrant dans ladite zone.

Par ailleurs, le réacteur 1 peut optionnellement comprendre une série d'obstacles annulaires profilés 9, positionnés sur toute la périphérie de sa paroi interne, immédiatement en aval de la zone d'injection, en vue de remélanger le milieu réactionnel. Ces obstacles peuvent être constitués de matériau réfractaire et être d'épaisseur telle qu'ils engendrent une réduction de 5 % à 30 % de la section du réacteur. Ici, trois obstacles ont été représentés, mais ils peuvent être au nombre de un à dix et sont de préférence espacés d'une distance comprise entre 0,5 et deux fois le diamètre moyen du réacteur.

La colonne 1 débouche à son sommet dans une enceinte 10, qui lui est par exemple concentrique et dans laquelle s'effectuent la séparation de la charge à craquer et le strippage des particules désactivées de catalyseur. Le catalyseur est séparé de la charge traitée dans un cyclone 11, qui est logé dans l'enceinte 10, au sommet de laquelle est prévue une ligne d'évacuation 14 des effluents de la réaction, qui sont acheminés vers une zone de fractionnement non représentée. Les particules de catalyseur désactivées se déplacent par gravité vers la base de l'enceinte 10. Une ligne 12 alimente en fluide de strippage, généralement de la vapeur d'eau, des injecteurs ou diffuseurs 13 de gaz de fluidisation disposés régulièrement à la base de l'enceinte 10.

Les particules désactivées de catalyseur ainsi strippées sont évacuées à la base de l'enceinte 10 vers un régénérateur 17, par l'intermédiaire d'un conduit 15, sur lequel est prévue une vanne de régulation 16. Dans le régénérateur 17, le coke déposé sur les particules du catalyseur est brûlé à l'aide d'air, injecté à la base du régénérateur par une ligne 21, qui alimente des injecteurs ou diffuseurs 20 régulièrement espacés. Les particules du catalyseur entraînées par le gaz de combustion sont séparées par des cyclones 19, d'où le gaz de combustion est évacué par une ligne 18, tandis que les particules de catalyseur sont rejetées vers la base du régénérateur 17, d'où elles sont recyclées à l'alimentation de l'élévateur 1 par le conduit 2, équipé d'une vanne de régulation 3.

Les caractéristiques dimensionnelles et opératoires d'une unité du type de celle représentée sur la figure 1 sont habituellement les suivantes :
- hauteur du réacteur-élévateur 1: 5 à 40 mètres,
- débit total d'alimentation de l'élévateur 1 en charge(s) à traiter: 2000 à 15000 tonnes par jour,
- débit d'alimentation du réacteur 1 en catalyseur : 3 à 50 tonnes par minute,
- température(s) des charges à craquer: 70 à 450°C,
- température de craquage dans le réacteur 1, en aval de la zone d'injection: 500 à 600°C,
- pression opératoire dans le réacteur 1: 0,5.10⁵ à 5.10⁵ Pascals relatifs,
- temps de séjour de la charge dans l'élévateur 1: 0,1 à 10 secondes,
- température de régénération du catalyseur: 600 à 950°C,
- temps de séjour du catalyseur dans le régénérateur 9: 5 à 20 minutes.

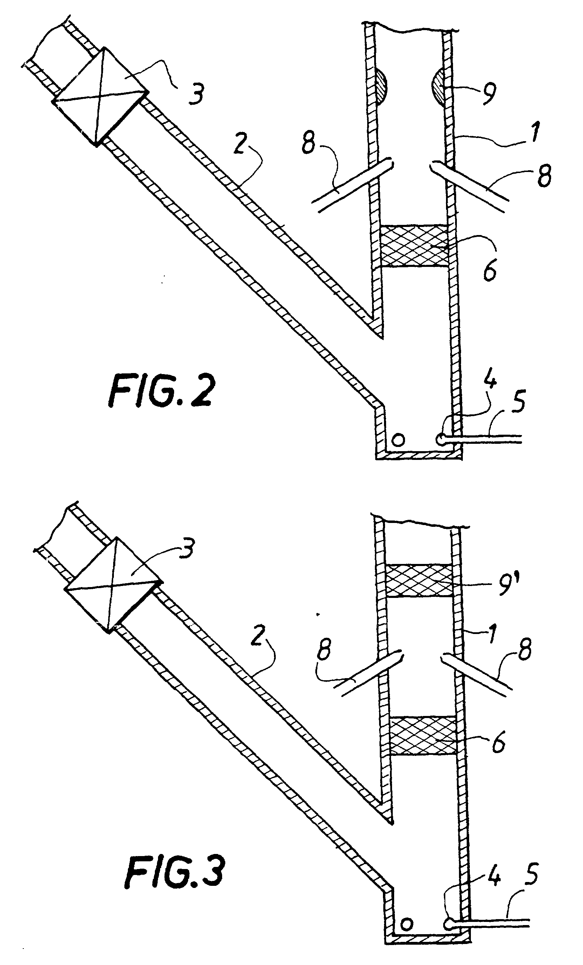

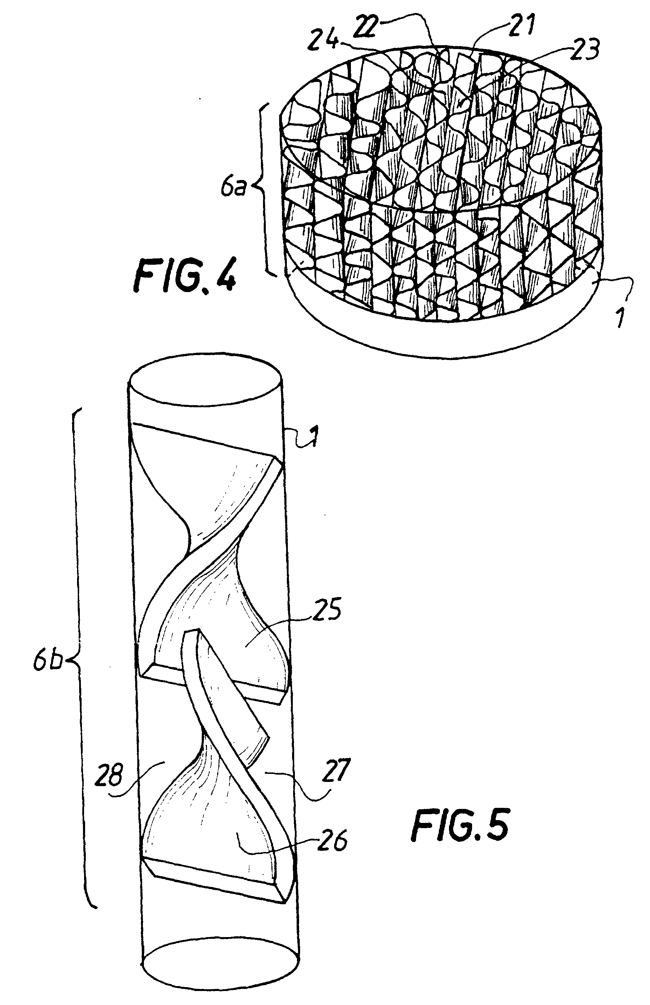

La figure 2 est une vue plus détaillée de la partie amont du réacteur 1 d'une unité du type de celle décrite dans la figure précédente. Un élément de garnissage 6 du type des mélangeurs statiques, et qui peut être très avantageusement l'élément décrit à la figure 4, assure une homogénéisation et une stabilisation du flux de gaz et de particules de catalyseur pénétrant dans la zone d'injection de la charge à craquer, située au niveau des injecteurs de charge 8. Immédiatement en aval de ladite zone d'injection de charge, une série d'obstacles annulaires profilés 9 de section arrondie, dont seul le premier a été représenté, permettent de dévier le flux de particules de catalyseur en mélange avec la charge, et notamment de repousser lesdites particules en direction de l'axe central du réacteur 1. La portion du réacteur 1 comprise entre le mélangeur statique 6 et le premier obstacle annulaire 9 constitue ainsi une véritable chambre de mélange, optimisée de manière à aboutir à une mise en contact intime et uniforme des particules catalytiques et de la charge à craquer, pulvérisée au sein de ladite chambre au moyen des injecteurs 8.

La figure 3 représente une variante possible par rapport à la figure 2. Conformément à l'invention et de même que sur la figure 2, un élément de garnissage 6 du type des mélangeurs statiques est positionné dans le réacteur élévateur 1, immédiatement en amont des injecteurs de charge 8. En aval de ces derniers, un deuxième élément de garnissage du type des mélangeurs statiques 9', qui peut être identique ou différent de l'élément 6, est employé comme moyen de recentrage des particules de catalyseur immédiatement après l'injection de charge à craquer. Le réacteur 1 dispose par conséquent, entre les deux éléments 6 et 9', d'une chambre d'injection et de mélange particulièrement efficace.

La figure 4 est une vue en perspective d'un élément du type des mélangeurs statiques, qui constitue un élément de garnissage préféré pour le dispositif selon l'invention. Cet élément de garnissage 6a est fixé dans le réacteur 1 en amont de la zone d'injection de charge à craquer, non représentée ici. Cet élément est constitué d'un assemblage de plaques ondulées, coupées transversalement par rapport à la direction générale des ondulations. Deux plaques consécutives 21 et 22 sont assemblées de façon telle que l'arête d'ondulation de la première forme un angle de sensiblement 90 degrés avec l'arête d'ondulation de la seconde. Ainsi, les arêtes d'ondulation de chaque plaque s'entrecroisent avec les arêtes d'ondulation des d'une plaque adjacente, constituant ainsi des cellules 23, 24 agencées en réseau de canaux croisés.

Dans le cas présenté, les plaques ondulées en acier réfractaire sont soudées les unes aux autres au niveau de leurs arêtes d'ondulation. Le flux de gaz et de particules de catalyseur pénètre dans les cellules et sont guidées dans les canaux croisés. L'agencement du réseau de cellules permet de dévier le gaz et les particules de manière sensiblement radiale, ce à chaque intersection formée par les arêtes d'ondulation d'une plaque avec les arêtes d'ondulation d'une plaque adjacente, entraînant ainsi une distribution homogène des particules catalytiques au sein du fluide gazeux.

La figure 5 est une vue en perspective d'un autre type de mélangeur statique, et qui peut également constituer un élément de garnissage pour le dispositif selon l'invention. Cet élément de garnissage 6b est fixé dans le réacteur 1 en amont de la zone d'injection de charge à craquer, non représentée ici.

Il est constitué de deux fragments d'hélices 25, 26 juxtaposés et décalés en rotation l'un par rapport à l'autre. Le premier fragment d'hélice 26 divise la section du réacteur 1 en deux cellules torsadées 27 et 28, qui dévient radialement le flux de gaz et de particules qui les traverse. Le fragment d'hélice suivant 25 redivise et redévie ledit flux, ce qui, in fine, aboutit à une homogénéisation de celui-ci.

Ici, deux fragments d'hélices consécutifs ont été représentés, mais l'élément de garnissage peut présenter un seul ou avantageusement plusieurs tels fragments. Par ailleurs, sur une même section du réacteur, le garnissage peut comporter un seul fragment d'hélice occupant tout ou partie de ladite section, ou au contraire plusieurs fragments d'hélice parallèles.

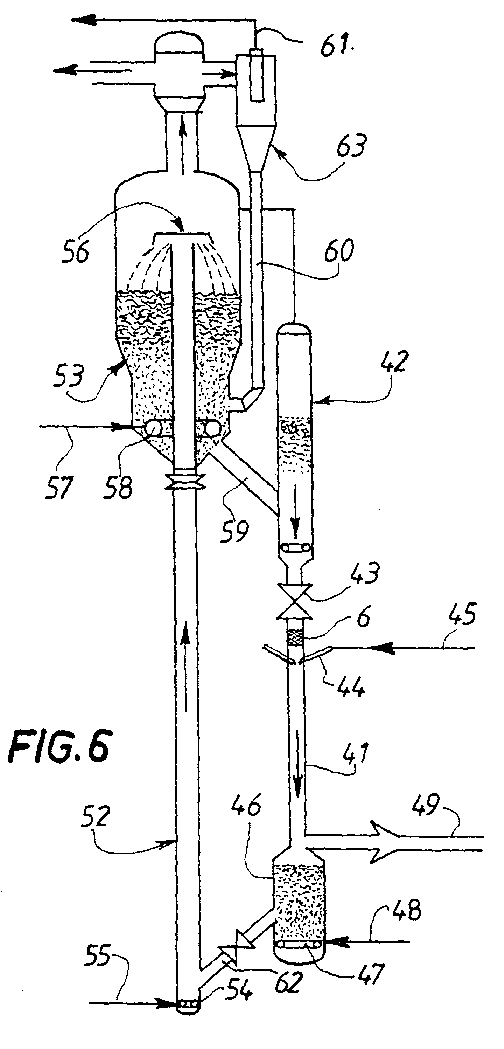

La figure 6 illustre l'application de l'invention au cas d'une unité de craquage catalytique équipée d'un réacteur à flux essentiellement descendant.

Le dispositif représenté comprend un réacteur tubulaire 41 à flux descendant, ou "downer", alimenté à sa partie supérieure, à partir d'une enceinte 42, qui lui est concentrique, en particules de catalyseur régénéré, avec un débit régulé au moyen d'une vanne 43. Au-dessous de cette vanne, l'alimentation du réacteur 41 en flux de particules de catalyseur s'effectue selon un dispositif conforme à l'invention : un élément de garnissage 6 constitué d'un réseau de cellules, par exemple un élément du type des mélangeurs statiques tels que représentés à la figure 4, assure une série de divisions et de recombinaisons du flux de particules et de gaz qui le traverse, assurant une homogénéisation et une stabilisation dudit flux immédiatement en amont de la zone d'injection de charge à craquer, située au niveau des injecteurs 44. Cette charge est acheminée aux injecteurs-pulvérisateurs 44 par la ligne 45. Les particules de catalyseur et les hydrocarbures s'écoulent alors de haut en bas dans le réacteur 41.

A la base de celui-ci, les particules de catalyseur usé se déversent dans une enceinte de stripage 46, munie à sa base d'un diffuseur 47, alimenté en vapeur d'eau par la ligne 48.

Egalement à la base du réacteur 41, au-dessus de l'enceinte 46, débouche une ligne 49, par laquelle les produits du craquage et les hydrocarbures provenant du strippage sont évacués vers une zone où ils seront fractionnés.

Les particules de catalyseur strippé sont évacuées par gravité hors de l'enceinte 46, par un conduit incliné 62, vers une colonne ascendante 52, dans laquelle ils sont acheminés vers le haut, vers un régénérateur 53, à l'aide d'un gaz vecteur diffusé en 54 à la base de la colonne 52, à partir de la ligne 55.

La colonne 52 débouche dans le régénérateur 53 au-dessous d'un séparateur balistique 56, qui assure la séparation des particules de catalyseur et du gaz vecteur. Les particules de catalyseur sont alors régénérées par combustion du coke qui s'est déposé à leur surface, à l'aide d'un courant d'air ou d'oxygène amené par la ligne 57 au diffuseur 58.

A la partie supérieure du régénérateur 53, les gaz provenant de la combustion sont évacués vers des cyclones 63. Les particules de catalyseur entraînées sont recyclées par le conduit 60 vers le régénérateur, et les gaz sont évacués par la ligne 61. Quant aux particules de catalyseur régénéré, elles sont évacuées, à la base du régénérateur 53, par gravité le long du conduit 59 en direction de l'enceinte 42.

L'exemple qui suit vise à illustrer l'invention et n'a par conséquent aucun caractère limitatif.

### EXEMPLE

Trois essais de craquage catalytique ont été effectués à partir d'une charge pétrolière lourde, constituée de distillat sous vide, auquel a été ajoutée une coupe riche en extraits aromatiques particulièrement réfractaires au craquage. Cette charge possède une densité à 15°C de 0,94 et une teneur en hydrogène moléculaire de 11,8 % en poids.

Les essais ont été réalisés dans une unité expérimentale de craquage catalytique comportant un réacteur de type " riser " (tel que celui représenté sur la figure 1). Le catalyseur utilisé est un catalyseur commercial classique, de type zéolithique.

Le premier Essai est réalisé conformément à l'art antérieur. En particulier, le réacteur ne comprend aucun dispositif d'homogénéisation du flux de gaz et de catalyseur entre le niveau d'introduction dudit flux dans le réacteur et le niveau d'injection de la charge à craquer.

Pour le deuxième Essai, l'unité est modifiée conformément à l'invention: dans le réacteur, entre la zone d'alimentation en flux de catalyseur et la zone d'injection de la charge à craquer, sont fixés des éléments de garnissage dont la configuration est celle d'un mélangeur statique tel que celui représenté sur la figure 4.

Le troisième Essai est également réalisé dans une unité conforme à l'invention, mais qui a encore été perfectionnée par rapport au deuxième Essai: le réacteur comporte en outre, immédiatement en aval de la zone d'injection de charge à craquer une série d'obstacles annulaires profilés et de section arrondie. La configuration de la chambre de mélange ainsi obtenue est telle que représentée sur la figure 2.

Pour ces trois essais, la charge est injectée avec un débit de 6600 tonnes par jour et le réacteur fonctionne à une température de sortie de 505°C.

Le Tableau qui suit reprend un certain nombre de conditions opératoires et résume les résultats des trois essais en terme de rendements de conversion et de température régnant dans le réacteur immédiatement en aval de la zone d'injection de la charge. Ces températures ont été mesurées à deux niveaux (à 2 mètres et à 3 mètres au dessus du niveau d'injection de la charge), à chaque fois au moyen d'un système de quatre thermocouples disposés régulièrement sur la paroi interne du réacteur.

**Tableau**

| | **Essai n° 1** | **Essai n° 2** | **Essai n° 3** |
|---|---|---|---|
| **Conditions opératoires:** | | | |
| | | | |
| Température de préchauffe de la charge (°C) | 380 | 371 | 368 |
| Température du régénérateur (°C) | 737 | 703 | 693 |
| Rapport C/O | 3,6 | 4,3 | 4,6 |
| Delta Coke | 0,98 | 0,82 | 0,77 |
| | | | |

| **Rendements:** | | | |
|---|---|---|---|
| | | | |
| Conversion (% en volume) | 53,4 | 59,6 | 61 |
| Rendement en gaz (% en poids) | 2,98 | 2,53 | 2,17 |
| Rendement en GPL (% en poids) | 9,13 | 10,52 | 11,01 |
| Rendement en essence (% en poids) | 36,28 | 41,38 | 42,65 |
| Rendement en distillat (% en poids) | 26,13 | 24,67 | 24,85 |
| Rendement en slurry (% en poids) | 21,92 | 17,35 | 15,76 |
| Rendement en coke (% en poids) | 3,55 | 3,55 | 3,55 |
| | | | |

| **Températures en aval de l'injection de charge:** | | | |
|---|---|---|---|
| | | | |
| A 2m de l'injection de charge: moyenne (°C) | 540 | 524 | 520 |
| dispersion (°C) | ± 15 | ± 6 | ± 2 |
| A 3m de l'injection de charge: moyenne (°C) | 525 | 520 | 518 |
| dispersion (°C) | ± 8 | ± 5 | ± 2 |
| | | | |
| Température de mélange calculée (°C) | 553 | 550 | 548 |

Dans le tableau ci-dessus, les produits obtenus sont définis comme suit:
- gaz: hydrocarbures légers à 1 ou 2 atomes de carbone et hydrogène sulfuré (H₂S);
- GPL: hydrocarbures légers à 3 ou 4 atomes de carbone;
- essence: coupe d'hydrocarbures dont l'intervalle d'ébullition s'étend de 20°C jusque vers 200°C;
- distillat: coupe d'hydrocarbures dont l'intervalle d'ébullition s'étend de 200°C jusque vers 360°C;
- slurry: résidu de distillation, qui contient des quantités importantes de poussières de catalyseur et dont l'intervalle d'ébullition s'étend généralement au delà de 500°C.

On notera que, au cours des Essais n° 2 et 3, n'ont pas été détectées de variations de pression rapides en amont des injecteurs de charge à craquer, comme c'était le cas dans l'Essai n°1. Ceci indique que la mise en oeuvre de l'invention permet de supprimer le régime pulsatoire, c'est à dire de stabiliser l'alimentation de la zone d'injection de charge en flux de catalyseur.

Par ailleurs, dans les Essais 2 et 3, des mesures par gammamétrie ne révèlent plus d'hétérogénéité marquée de la densité du lit fluidisé de particules de catalyseur pénétrant dans la zone d'injection de charge à craquer. La mise en oeuvre de l'invention permet donc bien d'homogénéiser le flux de gaz et de catalyseur sur une même section du réacteur.

Le Tableau présenté ci-avant met clairement en évidence les progrès apportés par la présente invention.

D'une part, dans les Essais 2 et 3 conformes à l'invention, on constate une nette diminution de la dispersion des températures indiquées par les thermocouples disposés immédiatement en aval de la zone d'injection de charge. Ceci indique une bonne homogénéité du profil des températures régnant dans le réacteur, immédiatement en aval de la zone d'injection de charge. Par ailleurs, le niveau des températures observées est plus bas, et inférieur à la température de mélange calculée. Tous ces résultats indiquent, pour les Essais 2 et 3, comparativement à l'Essai 1 selon l'art antérieur, une nette amélioration de l'homogénéité, de la rapidité et de l'efficacité de la mise en contact entre la charge à craquer et le flux de catalyseur, ainsi qu'une meilleure progression de la réaction (processus endothermique).

Ce meilleur contactage entre le flux de catalyseur et la charge injectée se traduit par une diminution du taux de cokéfaction du catalyseur, illustré par le paramètre Delta Coke (ou masse de coke qui se dépose au cours du processus de craquage par unité de masse de catalyseur). Cette diminution du Delta Coke observée pour les Essais 2 et 3 permet, à température de sortie de réacteur constante, d'abaisser la température du régénérateur et d'augmenter la vitesse de circulation du catalyseur (à savoir augmenter le rapport C/O). S'instaurent ainsi des conditions favorables à une meilleure sélectivité des réactions de craquage catalytique.

D'autre part, l'homogénéisation et la stabilisation du flux de catalyseur alimentant le réacteur au moyen d'un garnissage de type mélangeur statique a permis d'augmenter la conversion de plus de 6 points, comme le montre l'Essai n°2. L'ajout d'un système de remélange immédiatement en aval de l'injection de la charge permet d'améliorer encore l'invention, et apporte un gain de conversion supplémentaire de 1,5 points.

De plus, l'invention permet effectivement d'accroître la sélectivité des réactions de craquage: pour les Essais 2 et 3, on constate une nette diminution des rendements en gaz légers et en slurry, qui sont des produits indésirables car difficilement valorisables. Cette diminution se fait au profit des produits intermédiaires recherchés, tels que les essences, les GPL.

Enfin, il est à noter que l'essence légère obtenue dans les Essais n° 2 et 3 est de bien meilleure qualité que celle obtenue dans l'Essai n°1 : elle contient en effet beaucoup moins d'oléfines (qui sont des composants indésirables). Ceci indique que l'invention permet une nette diminution des réactions de craquage thermique indésirables, au profit des réactions de craquage catalytique recherchées, car plus sélectives et générant des produits de meilleure qualité.

Le dispositif et le procédé selon l'invention permettent donc d'améliorer très nettement les performances des unités de craquage catalytique, ce qui est d'autant plus appréciable lorsque l'on souhaite traiter des charges particulièrement réfractaires au craquage, comme c'est le cas dans l'exemple présenté ci-avant.

## Revendications

1. Unité de craquage catalytique comprenant un réacteur (1, 41) de craquage catalytique à l'état fluide muni, dans sa partie amont, d'au moins un moyen (2, 42) d'alimentation en particules de catalyseur au moins partiellement régénérées et d'au moins un moyen (8, 44) d'injection de la charge à craquer, et un dispositif d'introduction de particules de catalyseur dans le réacteur (1, 41), cette unité étant **caractérisée en ce que** ladite partie amont du réacteur comporte, entre la zone d'alimentation en flux de catalyseur et la zone d'injection de la charge à craquer, au moins un élément de garnissage solide fixe (6, 6', 6a, 6b), s'étendant sur tout ou partie de la section transversale du réacteur et constitué d'un réseau de cellules au travers desquelles passent les particules de catalyseur, ledit réseau assurant au moins une étape de division et de recombinaison du flux de particules de catalyseur, de manière à redistribuer ce dernier de façon homogène sur la section transversale du réacteur.

2. Unité selon la revendication 1, **caractérisée en ce que** au moins un élément de garnissage (6a, 6b) est constitué d'un réseau de cellules (23, 24, 27, 28) orientant chacune de manière sensiblement radiale la direction du flux de gaz et de particules qui la traverse.

3. Unité selon l'une des revendications précédentes, **caractérisée en ce qu'**au moins un élément de garnissage (6, 6') est du type des mélangeurs statiques.

4. Unité selon la revendication 3, **caractérisée en ce que** ledit élément de garnissage (6a) est constitué d'un réseau de cellules (23, 24) qui orientent sensiblement 50 % du flux de grains de catalyseur et de fluide de transport qui le traverse dans une première direction et sensiblement 50 % dudit flux dans une deuxième direction formant un angle de 10 à 90 degrés avec la première direction.

5. Unité selon la revendication 4, **caractérisée en ce que** ledit élément de garnissage est constitué d'un assemblage de plaques ondulées (21, 22), coupées transversalement par rapport à la direction générale de leurs ondulations, et façonnées ou soudées de façon telle que l'arête d'ondulation de chaque plaque forme un angle de sensiblement 45 à 135 degrés, et de préférence de 90 degrés, avec l'arête d'ondulation de la plaque adjacente.

6. Unité selon la revendication 3, **caractérisée en ce que** ledit élément (6b) de garnissage est constitué d'au moins un fragment d'hélice (25, 26).

7. Unité selon la revendication 6, **caractérisée en ce que** ledit élément de garnissage est constitué de plusieurs fragments d'hélice (25, 26) juxtaposés et décalés en rotation les uns par rapport aux autres.

8. Unité selon la revendication 1, **caractérisée en ce qu'**au moins un élément de garnissage (6, 6') est une grille.

9. Unité selon la revendication 1, **caractérisée en ce qu'**au moins un élément de garnissage (6, 6') est constitué d'un système de barres entrecroisées, empilées et éventuellement soudées les unes aux autres.

10. Unité selon l'une quelconque des revendications précédentes, **caractérisée en ce que** le réacteur comporte au moins deux, et de préférence de deux à quatre éléments de garnissage (6, 6', 6a, 6b), qui peuvent être identiques ou non, et juxtaposés ou au contraire espacés.

11. Unité selon l'une quelconque des revendications précédentes, **caractérisée en ce que** lesdits éléments de garnissage (6, 6', 6a, 6b) sont constitués d'un ou plusieurs matériaux aptes à résister à la chaleur et à l'érosion, tels que l'acier réfractaire, la céramique.

12. Unité selon l'une quelconque des revendications précédentes, **caractérisée en ce que** lesdits éléments de garnissage (6, 6', 6a, 6b) sont positionnés, dans la partie verticale du réacteur située en amont de l'injection de la charge, à un niveau tel que le flux de grains de catalyseur qui les traverse se trouve sous forme d'une phase fluidisée, dont on peut, par injection de vapeur de fluidisation, ajuster la densité à une valeur comprise entre 200 et 800 kg/m³.

13. Procédé de craquage catalytique d'une charge hydrocarbonée, dans lequel on alimente un réacteur de type tubulaire (1, 41), à flux essentiellement ascendant ou descendant, en particules de catalyseur au moins partiellement régénérées, sous forme d'un lit fluidisé dans lequel on injecte ensuite la charge à craquer, ce procédé étant **caractérisé en ce que**, entre l'étape d'alimentation en flux de catalyseur et l'étape d'injection de la charge à craquer, est prévue au moins une étape consistant en une ou plusieurs divisions simultanées du flux de grains de catalyseur suivies de recombinaison dudit flux, de manière à redistribuer ce dernier de façon homogène sur la section transversale du réacteur.

14. Procédé selon la revendication 13, **caractérisé en ce que** l'on réhomogénéise ensuite le flux de particules de catalyseur immédiatement en aval de l'injection de charge à craquer, en procédant à un recentrage des particules de catalyseur par tout moyen connu permettant de dévier le trajet des particules de catalyseur et préférentiellement de les repousser en direction de l'axe central du réacteur.

15. Procédé selon la revendication 14, **caractérisé en ce que** l'on réhomogénéise le flux de particules de catalyseur immédiatement en aval de l'injection de charge au moyen de un ou plusieurs obstacles circulaires profilés (9, 9'), positionnés sur toute la périphérie de la paroi interne du réacteur (1, 41) et assurant un ou plusieurs rétrécissements locaux de la section de ce dernier.

16. Procédé selon la revendication 15, **caractérisé en ce que** lesdits obstacles circulaires profilés (9, 9') sont annulaires ou hélicoïdaux.

17. Procédé selon les revendications 15 et 16, **caractérisé en ce que** lesdits obstacles circulaires profilés (9, 9') présentent une section arrondie, par exemple hyperbolique, en demi-cercle ou encore en demi-ellipse.

18. Procédé selon la revendication 14, **caractérisé en ce que** l'on réhomogénéise le flux de particules de catalyseur immédiatement en aval de l'injection de charge au moyen de un ou plusieurs éléments de garnissage (9') tels que ceux (6, 6', 6a, 6b) intervenant dans l'homogénéisation du lit fluidisé de catalyseur en amont de l'injection de charge, comme par exemple des grilles, des barres entrecroisées, des éléments du type des mélangeurs statiques.

19. Procédé selon la revendication 14, **caractérisé en ce que** l'on réhomogénéise le flux de particules de catalyseur immédiatement en aval de l'injection de charge au moyen d'un dispositif d'injection de fluide gazeux de recentrage, positionné sur ou dans la paroi interne du réacteur.

20. Utilisation de l'unité selon l'une des revendications 1 à 12 dans un procédé utilisant des réactions de craquage thermique, par mise en contact, dans un réacteur de type tubulaire, d'une coupe d'hydrocarbures avec une phase fluidisée de particules essentiellement caloporteuses.

## Patentansprüche

1. Einheit zum katalytischen Cracken mit einem Reaktor (1, 41) zum katalytischen Wirbelstromcracken, die in ihrem stromaufwärts liegenden Teil mit mindestens einer. Einrichtung (2, 42) zum Zuführen von Katalysatorteilchen, die zumindest teilweise regeneriert sind, und mit mindestens einer Einrichtung (8, 44) zum Injizieren der zu crackenden Beladung, und mit einer Vorrichtung zum Einführen von Katalysatorteilchen in den Reaktor (1, 41) ausgestattet ist, wobei die Einheit **dadurch gekennzeichnet ist, dass** der besagte Teil stromaufwärts des Reaktors, zwischen der Zufuhrzone des Katalysatorstroms und der Injizierzone der zu crackenden Beladung mindestens ein festes, fixiertes Auskleidungselement (6, 6', 6a, 6b) umfasst, welches sich über den gesamten oder einen Teil des Querschnitts des Reaktors erstreckt und aus einem Netzwerk von Zellen aufgebaut ist, durch dessen Breite die Katalysatorteilchen hindurchströmen, wobei das Netzwerk mindestens eine Stufe der Aufteilung und der Rekombination des Stroms der Katalysatorteilchen sicherstellt, um das Letztere auf homogene Weise auf den Querschnitt des Reaktors wieder zu verteilen.

2. Einheit gemäß Anspruch 1, **dadurch gekennzeichnet, dass** mindestens ein Auskleidungselement (6a, 6b) sich aus einem Netzwerk von Zellen (23, 24, 27, 28) zusammensetzt, die jeweils auf etwa radiale Weise die Strömungsrichtung des Gases und der Partikel, die sie durchlaufen, ausrichten.

3. Einheit gemäß einem der vorangehenden Ansprüche, **dadurch gekennzeichnet, dass** mindestens ein Auskleidungselement (6a, 6b) vom Typ statischer Mischer ist.

4. Einheit gemäß Anspruch 3, **dadurch gekennzeichnet, dass** das Auskleidungselement (6a) sich aus einem Netzwerk von Zellen (23, 24) zusammensetzt, die etwa 50% des Stroms der Katalysatorteilchen und des Transportfluids, die diese durchqueren, in einer ersten Richtung und etwa 50% des besagten Stroms in einer zweiten Richtung, die einen Winkel von 10 bis 90° gegenüber der ersten Richtung bildet, ausrichten.

5. Einheit gemäß Anspruch 4, **dadurch gekennzeichnet, dass** das Auskleidungselement sich aus einem Zusammenbau von Wellplatten (21, 22) zusammensetzt, die quer im Verhältnis zur allgemeinen Richtung ihrer Wellung geschnitten sind, und die derart geformt oder geschweißt sind, dass die Wellkante jeder Platte einen Winkel von ungefähr 45 bis 135° und vorzugsweise von 90° mit der Wellkante der danebenliegenden Platte bildet.

6. Einheit gemäß Anspruch 3, **dadurch gekennzeichnet, dass** das Element (6b) der Auskleidung sich aus mindestens einem Helixfragment (25, 26) zusammensetzt.

7. Einheit gemäß Anspruch 6, **dadurch gekennzeichnet, dass** das Auskleidungselement sich aus mehreren Helixfragmenten (25, 26) zusammensetzt, die nebeneinander liegen und gegeneinander versetzt sind.

8. Einheit gemäß Anspruch 1, **dadurch gekennzeichnet, dass** mindestens ein Auskleidungselement (6, 6') ein Gitter ist.

9. Einheit gemäß Anspruch 1, **dadurch gekennzeichnet, dass** mindestens ein Auskleidungselement (6, 6') sich aus einem System von Gliedern zusammensetzt, die sich einander kreuzend, aufgeschichtet und ggf. verschweißt sind.

10. Einheit gemäß irgendeinem der vorangehenden Ansprüche, **dadurch gekennzeichnet, dass** der Reaktor mindestens zwei, vorzugsweise zwei bis vier Auskleidungselemente (6, 6', 6a, 6b) umfasst, die identisch sein können oder nicht, und welche nebeneinander liegend oder im Gegensatz dazu voneinander getrennt sind.

11. Einheit gemäß irgendeinem der vorangehenden Ansprüche, **dadurch gekennzeichnet, dass** die Auskleidungselemente (6, 6', 6a, 6b) sich aus einem oder mehreren Material (Materialien) zusammensetzen, welches (welche) in der Lage ist (sind), Hitze und Abtragung zu widerstehen, wie hitzebeständiger Stahl bzw. Keramik.

12. Einheit gemäß einem der vorangehenden Ansprüche, **dadurch gekennzeichnet, dass** die Auskleidungselemente (6, 6', 6a, 6b) in dem vertikalen Teil des Reaktors stromaufwärts des Injizierens der Beladung bei einem Niveau positioniert sind, dass sich der Strom der Katalysatorteilchen, die sie durchqueren, in Form einer fluidisierten Phase befindet, deren Dichte durch Injizieren von Fluidisierungsdampf auf einen Wert von zwischen einschließlich 200 und 800 kg/m³ eingestellt werden kann.

13. Verfahren des katalytischen Crackens einer Kohlenwasserstoffbeladung, bei dem mindestens teilweise regenerierte Katalysatorteilchen bei einem im Wesentlichen aufsteigenden oder absteigenden Strom einem röhrenförmigen Reaktor (1, 41) in Form eines Fluidbetts zugeführt wird, in das anschließend die zu crackende Beladung injiziert wird, wobei das Verfahren **dadurch gekennzeichnet ist, dass** zwischen dem Schritt der Zufuhr des Katalysatorstroms und dem Schritt der Injektion der zu crackenden Beladung mindestens ein Schritt vorgesehen wird, der aus einem oder mehreren gleichzeitigen Aufteilungen des Stroms der Katalysatorkörner, gefolgt von einer Rekombination des Stroms, besteht, um das Letztere auf homogene Weise wieder über den Querschnitt des Reaktors zu verteilen.

14. Verfahren gemäß Anspruch 13, **dadurch gekennzeichnet, dass** dann der Strom der Katalysatorteilchen unmittelbar stromabwärts der Injektion der zu crackenden Beladung rehomogenisiert wird, indem durch vollständig bekannte Mittel Katalysatorteilchen zur Mitte hin gerichtet getrieben werden, wodurch die Ablenkung des Wegs der Katalysatorteilchen und vorzugsweise deren Zurückdrängen in die Richtung der zentralen Reaktorachse gestattet wird.

15. Verfahren gemäß Anspruch 14, **dadurch gekennzeichnet, dass** der Strom der Katalysatorteilchen unmittelbar stromabwärts der Injektion der Beladung mittels einer oder mehrerer rund profilierter Hindernisse (9, 9') rehomogenisiert wird, die auf dem gesamten Umfang der inneren Wandung des Reaktors (1, 41) positioniert sind und eine oder mehrere lokale Verengungen des Querschnitts des Letzteren sicherstellen.

16. Verfahren gemäß Anspruch 15, **dadurch gekennzeichnet, dass** die rund profilierten Hindernisse (9, 9') ringförmig oder schraubenförmig sind.

17. Verfahren gemäß Anspruch 15 und 16, **dadurch gekennzeichnet, dass** die rund profilierten Hindernisse (9, 9') einen rundlichen, z.B. hyperbolischen Querschnitt im Halbkreis oder aber in der Halbellipse zeigen.

18. Verfahren gemäß Anspruch 14, **dadurch gekennzeichnet, dass** der Strom der Katalysatorteilchen unmittelbar stromabwärts der Injektion der Beladung mittels einem oder mehreren Auskleidungselementen (9') rehomogenisiert wird wie jene (6, 6', 6a, 6b), die bei der Homogenisierung des Fluidbetts des Katalysators stromaufwärts der Injektion der Beladung eingesetzt sind, wie z.B. Gitter, sich kreuzende Glieder, Elemente vom Typ statischer Mischer.

19. Verfahren gemäß Anspruch 14, **dadurch gekennzeichnet, dass** der Strom der Katalysatorteilchen unmittelbar stromabwärts der Injektion der Beladung mittels einer Vorrichtung zur Injektion eines zur Mitte hin gerichteten, gasförmigen Fluids rehomogenisiert wird, die auf oder in der Innenwandung des Reaktors positioniert ist.

20. Verwendung der Einheit gemäß einem der Ansprüche 1 bis 12 in einem Verfahren unter Verwendung von thermischen Crackreaktionen durch In-Kontakt-bringen, in einem röhrenförmigen Reaktor, einer Kohlenwasserstoffmischung mit einer fluidisierten Phase von im Wesentlichen Wärme übertragenden Teilchen.

## Claims

1. Catalytic cracking unit comprising a fluid state catalytic cracking reactor (1, 41) provided, in its upstream portion, with at least one means (2, 42) for supplying catalyst particles which are at least partially regenerated and at least one means (8, 44) for injecting the charge to be cracked, and a device for introducing catalyst particles into the reactor (1, 41), this unit being **characterised in that** said upstream portion of the reactor comprises, between the catalyst flow supply zone and the zone for injecting the charge to be cracked, at least one fixed solid packing element (6, 6', 6a, 6b), extending over the entire cross-section or a portion of the cross-section of the reactor and consisting of a network of cells through which catalyst particles pass, said network ensuring at least one stage of division and recombination of the catalyst particle flow, so as to redistribute the catalyst uniformly over the cross-section of the reactor.

2. Unit according to claim 1, **characterised in that** at least one packing element (6a, 6b) consists of a network of cells (23, 24, 27, 28) each orienting the direction of the gas and particle flow passing through it in a substantially radial direction.

3. Unit according to either of the preceding claims, **characterised in that** at least one packing element (6, 6') is of the static mixer type.

4. Unit according to claim 3, **characterised in that** said packing element (6a) consists of a network of cells (23, 24) which orient substantially 50% of the flow of catalyst grains and conveying fluid passing through it in a first direction and substantially 50% of the flow in a second direction forming an angle of 10 to 90 degrees with the first direction.

5. Unit according to claim 4, **characterised in that** said packing element consists of an assembly of corrugated sheets (21, 22) cut transversely to the general direction of their corrugations, and moulded or welded in such a way that the corrugation ridge of each plate forms an angle of substantially 45 to 135 degrees, and preferably of 90 degrees, with the corrugation ridge of the adjacent plate.

6. Unit according to claim 3, **characterised in that** said packing element (6b) consists of at least one helix fragment (25, 26).

7. Unit according to claim 6, **characterised in that** said packing element consists of a plurality of fragments of a helix (25, 26) which are juxtaposed and rotationally offset relative to one another.

8. Unit according to claim 1, **characterised in that** at least one packing element (6, 6') is a grid.

9. Unit according to claim 1, **characterised in that** at least one packing element (6, 6') consists of a system of intersecting bars which are stacked and optionally welded together.

10. Unit according to any one of the preceding claims, **characterised in that** the reactor comprises at least two, and preferably from two to four packing elements (6, 6', 6a, 6b) which may be identical or not and juxtaposed, or on the contrary, spaced.

11. Unit according to any one of the preceding claims, **characterised in that** said packing elements (6, 6', 6a, 6b) consist of one or more heat-resistant and erosion-resistant materials such as refractory steel or ceramic.

12. Unit according to any one of the preceding claims, **characterised in that** said packing elements (6, 6', 6a, 6b) are positioned in the vertical portion of the reactor situated upstream from the injection of the charge, at a level such that the flow of catalyst grains passing through them is in the form of a fluidised phase, of which the density can be adjusted to a value between 200 and 800 kg/m³, by injection of fluidisation vapour.

13. Method for catalytically cracking a hydrocarbon-containing charge, in which a reactor of tubular type (1, 41), with a flow substantially upward or downward is supplied with catalyst particles which are at least partially regenerated, in the form of a fluidised bed in which the charge to be cracked is then injected, this process being **characterised in that**, between the stages of supplying with catalyst flow and injection with the charge to be cracked, at least one stage consisting of one or more simultaneous divisions of the flow of catalyst grains followed by recombination of said flow is provided in such a way as to redistribute said flow uniformly over the cross-section of the reactor.

14. Method according to claim 13, **characterised in that** the flow of catalyst particles is rehomogenised immediately downstream from the injection of the charge to be cracked, by recentring the catalyst particles by any known means for diverting the trajectory of the catalyst particles and preferably pushing them back toward the centre line of the reactor.

15. Method according to claim 14, **characterised in that** the flow of catalyst particles is rehomogenised immediately downstream from the injection of the charge, by means of one or more profiled circular obstacles (9, 9') positioned over the entire periphery of the internal wall of the reactor (1, 41) and ensuring one or mores local constrictions of the section thereof.

16. Method according to claim 15, **characterised in that** said profiled circular obstacles (9, 9') are annular or helical.

17. Method according to claims 15 and 16, **characterised in that** said profiled circular obstacles (9, 9') have a rounded section, for example a hyperbolic section, or a section in the form of a semicircle or else a semi-ellipse.

18. Method according to claim 14, **characterised in that** the flow of catalyst particles is rehomogenised immediately downstream from the injection of the charge, by means of one or more packing elements (9') such as those (6, 6', 6a, 6b) involved in the homogenisation of the fluidised catalyst bed upstream from the injection of the charge, such as for example, grids, intersecting bars, elements of the static mixer type.

19. Method according to claim 14, **characterised in that** the flow of catalyst particles is rehomogenised immediately downstream from the injection of the charge, by means of a device for injecting gaseous recentring fluid, positioned on or in the internal wall of the reactor.

20. Use of the unit according to any one of claims 1 to 12, in a method using thermal cracking reactions, by putting a cut of hydrocarbons in contact with a fluidised phase of substantially coolant particles in a tubular type reactor.
